# EUROPÄISCHE PATENTANMELDUNG

(11) **EP 2 746 725 A2**
(43) Veröffentlichungstag der Anmeldung: **25.06.2014**
(21) Anmeldenummer: 13005439.8
(22) Anmeldetag: 19.11.2013
(51) Int. Cl.: G01C 21/28

(54) **Verfahren und Steuervorrichtung zum Bereitstellen eines vorausliegenden Straßenverlaufs**

(30) Priorität: 19.12.2012 DE 102012024873
(71) Anmelder: AUDI AG, 85045 Ingolstadt (DE)
(72) Erfinder: Engel, Sebastian, 85051 Ingolstadt (DE)
(74) Vertreter: Thielmann, Frank

(57) **Zusammenfassung**

Die Erfindung betrifft ein Verfahren zum Bereitstellen eines vorausliegenden Straßenverlaufs in Bezug auf eine geografische Position und eine Fahrtrichtung (F) eines die Straße (2) nutzenden Fahrzeugs (1) an mindestens ein Fahrerassistenzsystem (100) des Fahrzeugs, mit den Schritten:
a) Bestimmen der geographischen Position des Fahrzeugs sowie Erfassen der Fahrtrichtung des Fahrzeugs;
b) Abrufen von Umgebungsdaten;
c) Auswerten der Umgebungsdaten zum Erkennen von Straßendaten zumindest von der genutzten Straße (2), und Zuordnen des Fahrzeugs (1) zu der Straße (2) mittels einer Steuervorrichtung (10);
d) Bestimmen der Fahrzeugposition relativ zu der Straße (2);
e) Bestimmen des Straßenverlaufs aus den Straßendaten;
f) Bereitstellen des Straßenverlaufs und der Fahrzeugposition;
wobei in Schritt b) ein Abrufen der Umgebungsdaten in Form von Luftbilddaten zu einem Luftbild des vorgebbaren Bereichs erfolgt; und in Schritt c) ein Extrahieren der Straßendaten aus den Luftbilddaten erfolgt. Des Weiteren betrifft die Erfindung eine Steuervorrichtung zum Ausführen des Verfahrens.

## Beschreibung

Die Erfindung betrifft ein Verfahren zum Bereitstellen eines vorausliegenden Straßenverlaufs gemäß dem Oberbegriff des Anspruchs 1. Des Weiteren betrifft die Erfindung eine Steuervorrichtung zum Ausführen des Verfahrens.

Im Bereich von Fahrassistenzsystemen sind in Fahrzeugen vorgesehene Erfassungseinrichtungen zum Erkennen eines vorausliegenden Straßenverlaufs bekannt, die z.B. eine Spurmarkierungen erfassende Kamera aufweisen. Die Information zu dem Straßenverlauf kann z.B. mit Positionsdaten des Fahrzeugs verarbeitet werden, um den Straßenverlauf mit Bezug zu der aktuellen Fahrzeugposition darzustellen, insbesondere auch in Verbindung mit elektronischen Straßenkarten. Neben Kameravorrichtungen können z.B. auch Radarsensoren oder Laserscanner zum Einsatz kommen, insbesondere zum Erfassen von Leitpfosten oder -planken.

Den Straßenverlauf möglichst genau zu bestimmen und vorherzusagen ist dabei z.B. im Hinblick auf die Steuerung einer Vorrichtung zur Spurassistenz (so genannter Lane Keeping Assistent LKA) oder einer Vorrichtung zur Kurvenassistenz von Interesse, damit die Spur genauer gehalten werden kann oder bei zu schneller Fahrt in eine Kurve früher oder zuverlässiger gewarnt werden kann, oder auch eine vorausschauendere Lichtsteuerung ermöglicht werden kann, z.B. das automatische Schwenken in Kurven oder um Krümmungen.

Die Reichweite solcher Erfassungseinrichtungen liegt jedoch in vielen Fällen maximal im Bereich von 200 Metern, wobei die Erfassungseinrichtungen bei Krümmungen oder Kurven der Fahrbahn Informationen zu dem Verlauf der Fahrbahn nur noch eingeschränkt erheben und auswerten können.

Die Patentschrift DE 199 21 437 C2 zeigt ein Verfahren und eine Vorrichtung zur Ermittlung der Straßengeometrie und der Position eines Fahrzeugs auf einer Straße, wobei Wegdaten des Fahrzeugs mit Straßengeometriedaten verglichen werden, und wobei das Fahrzeug einer Fahrspur zugeordnet werden kann, indem die Straßengeometriedaten auf Grundlage eines lateralen Versatzes einer Straßenmarkierung bestimmt werden, der durch eine am Fahrzeug angeordnete Fahrspurerkennungseinrichtung erfasst wird.

Die Patentschrift DE 10 2010 020 298 B4 zeigt ein Verfahren und eine Vorrichtung zur Erfassung von Straßenverkehrsdaten aus sich teilweise überlappenden, georeferenzierten digitalen Luftbildsequenzen einer Vielzahl von aktuell aufgenommenen Luftbildern, wobei eine Fahrzeugerkennung zur Reduzierung der Rechenzeit auf Grundlage von Bilddaten nur eines der Luftbilder erfolgt, die mittels eines ersten und zweiten Klassifikators aufeinanderfolgend ausgewertet werden. Die Verkehrsdaten können mit hoher Zuverlässigkeit und geringer Rechenzeit erfasst werden. Die Fahrzeugerkennung kann z.B. durch eine Suche nach für Fahrzeuge typischen Rechteckkonturen in den Luftbilddaten erfolgen. Die Fahrzeugerkennung kann z.B. ausschließlich für die geradlinigen Suchbereiche durchgeführt werden, insbesondere um die Rechenzeit durch Einsparen einer Koordinatentransformation zu reduzieren. Um den Suchbereich für die Fahrzeugerkennung weiter einzugrenzen, kann der auszuwertende Bereich entlang von aus einer eigenen separaten Straßendatenbank bzw. Verkehrswegenetz-Datenbank entnommenen und ins Luftbild projizierten Straßenachsen erfolgen.

Die Patentanmeldung EP 0 740 163 A2 zeigt eine Vorrichtung zum Erfassen einer Position eines Automobils relativ zu einer Straße, welche dazu ausgebildet ist, mittels einer in dem Fahrzeug angeordneten Kameravorrichtung eine Kontur der Straße zu erfassen, insbesondere mittels eines Randauslesemittels, eines Schwellwertgenerators und eines Konturauslesemittels, die Konturdaten zu verarbeiten und als konvertierte Koordinatendaten bereitzustellen, und maßstabsbezogene Merkmale zu erfassen zum Erzeugen von Dimensionsdaten, welche die Dimensionen der erfassten Konturen beschreiben, wobei auch kleinere Krümmungen der Straße erfasst werden können, und wobei die Positionserfassung unabhängig davon erfolgen kann, ob eine Straßenmarkierung in einem regelmäßigen oder unregelmäßigen Intervall vorliegt.

Aus der Druckschrift DE 10 2006 026 479 A1 ist ein Verfahren zur Bereitstellung von Umgebungsinformationen für ein Navigationssystem bekannt. Zur Routenberechnung werden aktuelle Umgebungsinformationen dadurch genutzt, dass aktuelle Satellitenbilder einer gewünschten Position angefordert werden und anhand der Satellitenbilder beispielsweise freie Parkplätze oder Verkehrsstaus ermittelt werden. Aufbereitete Bilddaten werden als Hintergrundbild verwendet und Vektorgrafiken, Straßeninformationen und Navigationsinformationen über dieses Hintergrundbild eingeblendet.

Darüber hinaus ist in der Druckschrift DE 10 2006 051 539 A1 ein Verfahren zur luftbildgestützten Umgebungserfassung bei Kraftfahrzeugen beschrieben. Aus fahrzeugbezogenen Bildaufnahmen und Luftbildaufnahmen wird die Umgebung des Fahrzeugs vermessen und Parameter werden aus der Fahrzeugumgebung, wie z. B. der Straßenverlauf, bestimmt.

Des Weiteren offenbart die Druckschrift DE 100 43 966 A1 ein Verfahren zur Navigation von Fahrzeugen. Dabei wird ein Satelliten-Navigationssystem genutzt und zusätzlich Aufnahmen von der Erdoberfläche, insbesondere aus dem Bereich, in dem sich das betrachtete Fahrzeug befindet. Die Satellitenaufnahmen haben den Vorzug, dass sie über den Istzustand der Verkehrssituation Auskunft geben, wobei über die Positionsbestimmung des Fahrzeugs eine Zuordnung jenes Bereichs zum Fahrer erfolgt, der einzig für ihn von Interesse ist. Hierbei handelt es sich um die augenblickliche Fahrzeugumgebung, häufig nur um jenen Bereich, der in Fahrtrichtung vorausliegt.

Es ist eine Aufgabe der Erfindung, eine Vorrichtung und ein Verfahren für eine möglichst genaue Straßenerkennung bereitzustellen, um auf Grundlage erzeugter Straßendaten einen Verlauf der Straße vorausschauend mit guter Genauigkeit vorauszubestimmen. Hierdurch soll auch eine verbesserte Steuerung eines Fahrzeugs, insbesondere auch im Hinblick auf die Fahrzeugsicherheit, ermöglicht werden können.

Diese Aufgabe wird durch ein Verfahren mit den Merkmalen des Patentanspruchs 1 sowie durch eine Steuervorrichtung mit den Merkmalen des nebengeordneten Patentanspruchs gelöst. Vorteilhafte Ausgestaltungen mit zweckmäßigen Weiterbildungen der Erfindung sind in den abhängigen Patentansprüchen angegeben.

Die Erfindung geht aus von einem Verfahren zum Bereitstellen eines vorausliegenden Straßenverlaufs in Bezug auf eine geografische Position und eine Fahrtrichtung eines die Straße nutzenden Fahrzeugs an mindestens ein Fahrerassistenzsystem des Fahrzeugs, mit den Schritten:
a) Bestimmen der geographischen Position des Fahrzeugs sowie Erfassen der Fahrtrichtung des Fahrzeugs;
b) Abrufen von Umgebungsdaten in einem vorgebbaren Bereich um die Fahrzeugposition, insbesondere aus einer Speichereinheit des Fahrzeugs, und insbesondere in einem auf die Fahrtrichtung des Fahrzeugs bezogenen Bereich;
c) Auswerten der Umgebungsdaten zum Erkennen von Straßendaten zumindest von der genutzten Straße in dem Bereich, und Zuordnen des Fahrzeugs zu der Straße, insbesondere mittels einer Steuervorrichtung;
d) Bestimmen der Fahrzeugposition relativ zu der Straße durch Kombinieren der Straßendaten mit der Fahrzeugposition, insbesondere mittels der Steuervorrichtung;
e) Bestimmen des Straßenverlaufs aus den Straßendaten in Bezug auf die Fahrtrichtung; und
f) Bereitstellen des Straßenverlaufs und der Fahrzeugposition an das Fahrerassistenzsystem; sowie
   - in Schritt b): Abrufen der Umgebungsdaten in Form von Luftbilddaten zu einem Luftbild des vorgebbaren Bereichs, insbesondere in die Steuervorrichtung; und
   - in Schritt c): Extrahieren der Straßendaten, insbesondere von Fahrbahndaten einer einzelnen Fahrbahn auf der Straße, aus den Luftbilddaten.

Das Verfahren ist dadurch weitergebildet, dass in Schritt e) nur diejenigen Straßenabschnitte zum Bestimmen des Straßenverlaufs ausgewertet werden, welche gemäß einer vorgegebenen Fahrtroute in den nächsten Sekunden oder Minuten von dem Fahrzeug befahren werden.

Die vorliegende Erfindung beruht damit auf der Erkenntnis, dass Luftbilddaten dazu genutzt werden können, den Verlauf der Straße auch in einer großen Reichweite auszuwerten, insbesondere auf möglichst genaue Art und besonders vorausschauende Weise, ohne dass auf eine separate Straßendatenbank zurückgegriffen werden muss. Der Straßenverlauf kann aus den Luftbilddaten selbst ausreichend genau und wahlweise auch in einer großen Entfernung vor dem Fahrzeug ermittelt werden.

Dabei kann das Fahrzeug kann in Bezug auf die aus den Luftbildern gewonnenen Straßendaten relativ auf der Straße zu Straßenrändern oder z.B. in Bezug auf enge Kurven positioniert werden. Somit kann einem Fahrerassistenzsystem eine Datengrundlage bereitgestellt werden, aus welcher hervorgeht, ob ein Fahrzeug in einer gefährlichen Situation ist, insbesondere im Hinblick auf den zu erwartenden Verlauf der Straße, also Unterführungen, Baustellen, Brücken, Kurven oder dergleichen. Dank der theoretisch unbeschränkten vorausschauenden Reichweite der Luftbilddaten kann eine solche gefährliche Situation auch mit ausreichender Vorlaufzeit vorausgesagt werden, was insbesondere bei hohen Geschwindigkeiten über 150, 200 oder sogar 225 km/h zweckdienlich ist.

Die Luftbilddaten sind dabei bevorzugt nicht approximiert oder durch geometrische Standard-Konturen vereinfacht worden, sondern liegen zunächst als (rohe) Bilddaten vor, die in der Form, in welcher sie erfasst wurden, ausgewertet werden können. Sie können dabei auch eine hohe Aktualität aufweisen. Die Auswertung des Straßenverlaufs kann dabei unabhängig von einer Erfassungseinheit (Kamera) des Fahrzeugs oder der Straßendatenbank eines Navigationssystems erfolgen, sondern allein basierend auf Luftbildern, aus welchen der Straßenverlauf ermittelt wird und in welche die Position des Fahrzeugs projiziert bzw. hereingerechnet wird. Es ist nur eine einzige Datengrundlage erforderlich. Eine Straßengeometrie oder der Verlauf irgendeiner Fahrbahnbegrenzungslinie muss dabei nicht durch fahrzeugeigene optische Erfassungsmittel aufgezeichnet werden, sondern kann allein basierend auf den Luftbilddaten berechnet werden, was auch mit einer frei wählbaren Reichweite in Bezug auf die von dem Fahrzeug zu befahrende Strecke erfolgen kann. Bei der Bestimmung des Verlaufs basierend auf Luftbilddaten kann auch der vorrichtungstechnische Aufwand bei Fahrzeugen verringert werden, da eine aufwändige oder technisch besonders ausgefeilte Umfelderfassungseinheit nicht erforderlich ist, wodurch nicht zuletzt auch die Kosten für ein Fahrerassistenzsystem gesenkt werden können.

Zum einen kann wie beschrieben durch die Nutzung von (Roh-)Bilddaten eine sehr gute Genauigkeit erzielt werden, zum anderen kann aber auch eine Datenmenge vergleichsweise schlank bzw. klein gehalten werden: über GPS ist die Position des Fahrzeugs bekannt, so dass die Straßendaten in Schritt c) speziell für die genutzte Straße extrahiert werden können, insbesondere in einer bestimmten Entfernung vor und ggf. auch hinter dem Fahrzeug, sofern ein Fahrerassistenzsystem den Heckbereich ebenfalls mit berücksichtigen kann. Es liegt also nicht eine große Datenbasis mit einer Vielzahl (schlecht) approximierter Straßenverlaufsdaten vor, sondern eine insbesondere selbst und bedarfsabhängig generierte kleine Datenbasis für die relevante(n) Straße(n). Dabei kann das Verfahren auch dahingehend weitergebildet werden, dass (nur) diejenigen Straßenabschnitte ausgewertet werden, welche gemäß einer vorgegebenen, in einem Navigationsgerät abgespeicherten und von dem Fahrzeug verfolgten Fahrroute in den nächsten Sekunden bzw. Minuten befahren werden. Hierdurch kann die Datenbasis besonders schlank gehalten und der Rechenaufwand minimiert werden.

Mittels des beschriebenen Verfahrens kann z.B. ein vorausschauendes Kurvenlicht in Abhängigkeit von aktuellen, abgerufenen bzw. in das Fahrzeug oder aus dem Fahrzeug geladenen Luftbilddaten und daraus ermittelten Straßendaten auf besonders genaue bzw. vorausschauende Weise gesteuert werden. Auch die Steuerung eines Automatikgetriebes zwecks vorausschauender Gangwahl kann ermöglicht werden. Dabei können z.B. auch Umleitungen oder Fahrbahnverlagerungen, z.B. in Baustellenbereichen, berücksichtigt werden.

Mit anderen Worten kann der Verlauf der Straße, insbesondere einer Fahrbahn der Straße dadurch rekonstruiert werden, dass aus bevorzugt unbearbeiteten, naturgetreuen (und wahlweise auch besonders aktuellen) Luftbilddaten Straßendaten erzeugt werden. Die Luftbilddaten können dabei zum einen sehr aktuell sein, zum anderen unverändert und noch nicht in dem Sinne digitalisiert und vereinfacht, dass der Straßenverlauf durch irgendwelche geometrischen Gebilde (Geraden, Kreisbögen, Klothoiden) insbesondere von einem zwischengeschalteten Datenserver oder einem Navigationssystem angenähert wurde, also vereinfacht wiedergegeben wurde, worunter die Genauigkeit leiden würde. Eine Approximation über geometrische Gebilde (Geraden, Kreisbögen, Klothoiden) erfolgt dabei meist bei in Navigationssystemen hinterlegten Karten, insbesondere zwecks reduzierter Datenmenge. Kleine S-Kurven werden dabei möglicherweise durch Geraden approximiert, oder aber ein Übergang von einer Geraden in eine Kurve wird nur grob angenähert, z.B. mit einem einheitlichen Krümmungsradius, obgleich die Kurve nicht kreisförmig verläuft. Hierbei müssen also Abstriche in der Genauigkeit hingenommen werden, die aber im Zusammenhang mit einem Fahrassistenzsystem nicht sinnvoll sind, also die Funktion des Fahrassistenzsystems beeinträchtigen würden.

Bei gemäß einer Variante des Verfahrens durch Kantenerkennung oder anderen Extraktionsverfahren aus den Luftbilddaten erzeugten Straßendaten kann der Verlauf mit einer großen Genauigkeit und auch einer großen Reichweite vorhergesagt werden, insbesondere auch unabhängig davon, ob optisch nicht erfassbare Kurvenbereiche oder durch Hügel oder sonstige Straßenkrümmungen verdeckte Straßenabschnitte vorliegen. Auch diese Straßenabschnitte sind in dem Luftbild erfasst und eine Kantenerkennung kann auch für diese aus der Position des Fahrzeugs nicht erfassbaren bzw. aus Sicht eines Fahrzeuginsassen nicht wahrnehmbaren Straßenabschnitte erfolgen. Auch kann ein besonders aktuelles Bild der Straße gewonnen werden, und z.B. auch eine verlegte Baustelle erfasst werden, insbesondere dann wenn die Luftbilddaten jeweils aktuell abgerufen und in das Fahrzeug geladen werden. Die Luftbilddaten können jedoch auch zu vorgebbaren Zeitpunkten abgerufen werden und das Verfahren kann unabhängig von einer Kommunikation mit einem Datenserver erfolgen. Vielmehr können die Luftbilddaten bzw. Straßen(verlaufs)daten aus einmal aufgenommenen und bereits abgespeicherten bzw. hinterlegten Luftbildern gewonnen werden. Die Auswertung ist also auch ohne kontinuierlich aufrechterhaltene Kommunikationsschnittstelle möglich.

Das Bestimmen der Position bzw. das Erfassen in Schritt a) des erfindungsgemäßen Verfahrens erfolgt bevorzugt durch Abrufen von geographischen Echtzeit-Positionsdaten zu der Position des Fahrzeugs bzw. durch Erfassen von Daten zu der Fahrtrichtung des Fahrzeugs.

In Schritt b) bzw. d) des erfindungsgemäßen Verfahrens erfolgt dabei bevorzugt ein Kombinieren der Luftbilddaten mit der Fahrzeugposition zum Bestimmen der Fahrzeugposition in dem Luftbild, insbesondere mittels der Steuervorrichtung.

In Schritt c) erfolgt das Extrahieren dabei bevorzugt mittels Kantenerkennung in dem Luftbild durch Erzeugen von Kantendaten zu der Straße, insbesondere in Abhängigkeit eines Skalierungsfaktors des Luftbildes, welcher Information über den Maßstab des Luftbildes und/oder die Höhe enthält, aus welcher das Luftbild erstellt ist. In Schritt e) kann dann Auswerten der Kantendaten erfolgen, insbesondere mittels der Steuervorrichtung.

In dem Schritt f) erfolgt bevorzugt ein Bereitstellen der Straßendaten mit Information zu einem Fahrbahnverlauf der Fahrbahn, welche von dem Fahrzeug genutzt wird. Hierzu wird die Kantenerkennung bevorzugt in Bezug auf eine einzelne Fahrbahn durchgeführt, insbesondere indem Fahrbahnbegrenzungslinien ausgewertet werden. Dabei kann die Fahrzeugposition relativ zu der Straße bzw. dem Straßenverlauf bereitgestellt werden.

Die fahrzeugeigene Speichereinheit kann als ein Zwischenspeicher ausgebildet sein, in welchen Kartendaten bzw. Umgebungsdaten nur zwischengespeichert werden, z.B. wenn sie aktuell über eine (Internet-)Verbindung abgerufen werden, sie kann aber auch alternativ oder zusätzlich als eine Art Festplattenspeicher ausgebildet sein, welcher die Umgebungsdaten fest gespeichert hat, so dass eine Kommunikation mit einer externen fahrzeugunabhängigen Kartendatenbank nicht notwendigerweise erforderlich ist.

Ein Skalierungsfaktor ist z.B. durch die Höhe aus welcher das Luftbild erstellt wurde, oder die flächenmäßige Größe des Bildausschnittes mit Bezug zur Erdoberfläche bestimmt. Der Skalierungsfaktor ist bei einem jeweiligen Luftbild bekannt und kann als Bildinformation mit dem Luftbild selbst übermittelt werden. Der Skalierungsfaktor kann als ein Teil der Luftbilddaten mit übertragen werden, ohne dass hierzu eine separate Datenverbindung oder ein separates Signal erforderlich ist. Der Skalierungsfaktor kann durch die Steuervorrichtung direkt aus den Luftbilddaten ermittelt bzw. ausgewertet werden.

Zwar ist es zweckdienlich, z.B. im Hinblick auf die auszuwertende Datenmenge und die erforderliche Rechenzeit, nur einen Straßenverlauf in einem Nahbereich in Fahrtrichtung vor dem Fahrzeug zu bestimmen, jedoch kann der Nahbereich auch konzentrisch um das Fahrzeug oder elliptisch mit der längeren Achse der Ellipse in Fahrtrichtung um das Fahrzeug angeordnet sein, um einem Fahrassistenzsystem auch Information zu einer Umgebung im Heckbereich des Fahrzeugs, also seitlich und hinter dem Fahrzeug, bereitzustellen. Für den Fall dass das Fahrzeug stillsteht, also nicht in einer bestimmten Richtung fährt, dann die Fahrtrichtung durch die Mittenlängsachse des Fahrzeugs definiert sein, d.h., die Positionsdaten können auch ohne zeitliche Änderung dahingehend ausgewertet werden, dass bei einem abgestellten Fahrzeug bekannt ist, in welche Richtung der Bug des Fahrzeugs weist, um das erfindungsgemäße Verfahren in Bezug auf die Fahrtrichtung ausführen zu können.

Die Kantenerkennung kann in Bezug auf die Straße als solche erfolgen, insbesondere wenn es sich um ein Luftbild aus großer Höhe handelt, oder auch in Bezug auf einzelne Fahrbahnen bzw. Fahrspuren der Straße, insbesondere wenn es sich um ein Luftbild aus geringer Höhe oder ein Luftbild mit besonders hoher Auflösung handelt. Dabei können die Kantendaten z.B. dadurch erzeugt werden, dass über Farbunterschiede, seien es Grautöne oder Farbabstufungen, die Straße und die seitlichen Begrenzungen der Straße identifiziert werden, wobei auch durchgezogene oder gestrichelte Fahrbahnmarkierungen erfasst werden können. Auch können Konturen, Formen oder Strukturen über vordefinierte Muster erkannt werden, um in diesen Konturen, Formen oder Strukturen eine gezielte Kantenerkennung durchzuführen.

Das Abrufen von geographischen Echtzeit-Positionsdaten des Fahrzeugs erfolgt bevorzugt durch ein fahrzeugeigenes GPS-System, welches GPS-Signale empfangen und auswerten kann. Daten zu einer Fahrtrichtung des Fahrzeugs können über den zeitlichen Verlauf der mittels der GPS-Signale empfangenen Positionsdaten erzeugt werden. Sie können jedoch auch über eine fahrzeugeigene Kompasseinrichtung bestimmt werden, welche Kompassdaten bzw. Fahrtrichtungsdaten in Bezug auf eine Mittenlängsachse des Fahrzeugs ausgeben kann.

Die geographischen Echtzeit-Positionsdaten können der fahrzeugeigenen Speichereinheit übergeben werden, und mit bereits in der Speichereinheit hinterlegten Luftbilddaten oder erst in Reaktion auf das Bestimmen der Position abgerufenen Luftbilddaten korreliert werden.

In dem Schritt e), insbesondere bereits ab dem Schritt d), ist nur noch das Verarbeiten der extrahierten (Kanten-)Daten erforderlich. Dies liefert den Vorteil, dass ein Fahrassistenzsystem nur mit einer geringen Datenmenge beliefert werden muss, also mit bereits im Hinblick auf die wesentliche Information gefilterten Straßenverlaufsdaten. Die Menge der extrahierten Straßendaten beträgt dabei nur einen Bruchteil der Luftbilddatenmenge, was den Rechenaufwand und die Rechenzeit minimiert.

Der ermittelte Verlauf der Fahrbahn kann für weitere Schritte des Verfahrens genutzt werden, insbesondere die Schritte:
g) Abrufen von Fahrzustandsdaten zu einem Fahrzustand des Fahrzeugs; und
h) Betreiben von mindestens einer Funktion des Fahrzeugs in Abhängigkeit der Fahrzeugposition und des Straßenverlaufs und in Abhängigkeit des Fahrzustands.

Diese Schritte können durch ein Fahrassistenzsystem übernommen werden, welches als Teilsystem des Fahrzeugsystems ausgebildet sein kann.

Gemäß einem vorteilhaften Ausführungsbeispiel erfolgt das Abrufen in Schritt b) und das Extrahieren in Schritt c) und/oder Auswerten in Schritt e) in einem Nahbereich um das Fahrzeug, insbesondere im Nahbereich von 100 bis 10000, bevorzugt 500 bis 5000, besonders bevorzugt 1000 Metern um das Fahrzeug, wobei der Nahbereich in Schritt b) in dem Bereich in Bezug auf die Luftbilddaten definiert wird. Wahlweise kann der Nahbereich in Bezug auf die Fahrtrichtung und/oder in Bezug auf den Straßenverlauf definiert werden, also bei einer sich serpentinenartig erstreckenden Straße rechteckig oder gar quadratisch seitlich querab zu dem Fahrzeug definiert werden, oder bei einer sich im Wesentlichen in einer Richtung erstreckenden Landstraße langgezogen und linienförmig entlang der Landstraße in Fahrtrichtung erstrecken. Hierdurch kann die zu verarbeitende Datenmenge reduziert werden.

Gemäß einem vorteilhaften Ausführungsbeispiel werden die Luftbilddaten aus der Speichereinheit und/oder zumindest teilweise über eine Kommunikationsschnittstelle, insbesondere online aus dem Internet, in das Fahrzeug geladen. Als online zugängliche Datenbank zum Laden der Luftbilddaten kann dabei eine beliebige Datenbank aufgefasst werden, in welcher bevorzugt möglichst aktuelle Luftbilddaten hinterlegt sind. Bevorzugt ist die Steuervorrichtung dazu ausgebildet, mit mehreren Online-Datenbanken zu verbinden, sei es gleichzeitig oder nacheinander, und zu prüfen, in welcher Online-Datenbank die Luftbilddaten für den interessierenden Bereich mit höherer Aktualität und/oder größerer bzw. besseren Auflösung (also detailliertere Luftbilddaten, insbesondere auch Luftbilddaten mit kleinerem Skalierungsfaktor, also aus einer geringeren Höhe aufgenommene Luftbilddaten) hinterlegt sind, um die Luftbilddaten mit der jeweils größeren Auflösung bzw. höheren Aktualität abzurufen.

Gemäß einem vorteilhaften Ausführungsbeispiel werden die Luftbilddaten online aus dem Internet in das Fahrzeug geladen, wobei in Schritt b) das Luftbild für einen Nahbereich in Fahrtrichtung vor dem Fahrzeug geladen wird und das Extrahieren in Schritt c) in dem Nahbereich in Bezug auf die Fahrtrichtung erfolgt. Hierdurch kann eine besonders hohe Aktualität der Straßendaten sichergestellt werden, und es können z.B. aufgrund von Baumaßnahmen verlagerte Straßenverläufe oder neu entstandene Brücke berücksichtigt werden.

Gemäß einem vorteilhaften Ausführungsbeispiel erfolgt nach dem Extrahieren in Schritt c) ein Interpolieren von Abschnitten des Luftbildes, in welchen der Straßenverlauf zumindest teilweise unterbrochen ist, insbesondere vor dem Schritt e). Hierdurch können irgendwelche Bildstörungen, Artefakte, zwischenzeitliche möglicherweise in Luftbilddaten mit aufgezeichnete Autoschlangen, welche die Straßenbegrenzungen verdecken könnten, ausgeglichen werden, und ein zusammenhängender Straßenverlauf kann dennoch ermittelt werden. Bevorzugt ist die Steuervorrichtung dazu ausgebildet, nach weiteren Luftbilddaten, insbesondere Luftbilddaten von einer alternativen Datenbank, zu einem Straßenabschnitt zu suchen, in welchem eine Interpolation erforderlich ist, um die Straßendaten mit größerer Sicherheit extrahieren und den Straßenverlauf rekonstruieren zu können. Dabei kann der Straßenverlauf zunächst auf Grundlage der interpolierten Daten bereitgestellt werden, um bei Auffinden von genaueren Luftbilddaten einen Abgleich durchzuführen, ob die Interpolation in einem Toleranzbereich erfolgte, und falls die interpolierten Straßendaten zu stark von den genaueren Luftbilddaten abweichen, das Extraktionsverfahren in Bezug auf die genaueren Luftbilddaten auszuführen und die genaueren Straßendaten bereitzustellen.

Gemäß einem vorteilhaften Ausführungsbeispiel werden die Straßendaten in Schritt c) bezogen auf ein vordefiniertes Koordinatensystem mit mindestens einer x- und einer y-Richtung, insbesondere ein dreidimensionales Koordinatensystem, bereitgestellt, wobei eine Schrittweite zumindest in x- und in y-Richtung definiert wird. Über die Schrittweite in x- und in y-Richtung kann die Genauigkeit festgelegt werden, mittels welcher der Straßenverlauf in einer bestimmten Richtung des Koordinatensystems ausgewertet wird. Handelt es sich um eine sehr kurvenreiche Straße, welche jedoch im wesentlichen in einer Ebene verläuft, z.B. eine Straße in einem Straßennetz einer niederländischen Stadt, so kann auf eine kleine Schrittweite in z-Richtung entsprechend einer vertikalen Richtung verzichtet werden. Handelt es sich hingegen um eine eher geradlinig verlaufende Straße, welche jedoch über eine ganze Reihe von Hügeln, Schwellen, Brücken, Unterführungen verläuft, so kann in der z-Richtung eine besonders kleine Schrittweite gewählt werden, und die Schrittweite in x- und y-Richtung vergrößert werden, insbesondere zur Reduzierung der zu verarbeitenden Datenmenge.

Gemäß einem vorteilhaften Ausführungsbeispiel werden der Straßenverlauf und die Fahrzeugposition mittels der Steuervorrichtung oder einem mit der Steuervorrichtung gekoppelten Fahrzeugsystem ausgewertet und es wird geprüft, ob eine Funktion des Fahrzeugs anzusteuern ist. Mit anderen Worten können die Daten derart bereitgestellt werden, dass eine Steuerung des Fahrzeugs durch ein Fahrerassistenzsystem ermöglicht ist.

Gemäß einem vorteilhaften Ausführungsbeispiel wird ein Fahrzustand des Fahrzeugs erfasst und ausgewertet, wobei das Prüfen sowie das Ansteuern des Fahrzeugs in Abhängigkeit des Fahrzustands erfolgt. Hierdurch kann z.B. auf eine besonders hohe Geschwindigkeit des Fahrzeugs reagiert werden und eine Warnmeldung ausgegeben werden oder auch bereits eine Drosselung der Geschwindigkeit erfolgen.

Die Aufgabe wird auch wie erwähnt durch eine Steuervorrichtung zum Bereitstellen eines vorausliegenden Straßenverlaufs in Bezug auf eine geografische Position und eine Fahrtrichtung eines die Straße nutzenden Fahrzeugs an mindestens ein Fahrerassistenzsystem des Fahrzeugs gelöst, welche ausgebildet ist zum:
- Bestimmen der geographischen Position des Fahrzeugs sowie Erfassen der Fahrtrichtung des Fahrzeugs;
- Abrufen von Umgebungsdaten in einem vorgebbaren Bereich um die Fahrzeugposition, insbesondere aus einer Speichereinheit des Fahrzeugs, und insbesondere in einem auf die Fahrtrichtung des Fahrzeugs bezogenen Bereich;
- Auswerten der Umgebungsdaten zum Erkennen von Straßendaten zumindest von der genutzten Straße in dem Bereich, und Zuordnen des Fahrzeugs zu der Straße;
- Bestimmen der Fahrzeugposition relativ zu der Straße durch Kombinieren der Straßendaten mit der Fahrzeugposition;
- Bestimmen des Straßenverlaufs aus den Straßendaten in Bezug auf die Fahrtrichtung; und
- Bereitstellen des Straßenverlaufs und der Fahrzeugposition an das Fahrerassistenzsystem;
   wobei die Steuervorrichtung ferner ausgebildet ist zum:
- Abrufen der Umgebungsdaten in Form von Luftbilddaten zu einem Luftbild des vorgebbaren Bereichs; und
- Extrahieren der Straßendaten, insbesondere von Fahrbahndaten einer einzelnen Fahrbahn auf der Straße, aus den Luftbilddaten; und wobei
- die Steuervorrichtung so ausgebildet ist, dass zum Bereitstellen des Straßenverlaufs nur diejenigen Straßenabschnitte ausgewertet werden, welche gemäß einer vorgegebenen Fahrtroute in den nächsten Sekunden oder Minuten von dem Fahrzeug befahren werden.

Durch eine solche Steuervorrichtung können Straßenverlaufsdaten mit hoher Genauigkeit an ein Fahrerassistenzsystem geliefert werden, und das Fahrzeug kann vorausschauend und mit ausreichenden zeitlich gepufferten Warnmöglichkeiten für den Fahrer gesteuert und wahlweise auch durch einen Eingriff in die Fahrdynamik geregelt werden.

Bevorzugt ist die Steuervorrichtung ausgebildet zum Kombinieren der Luftbilddaten mit der Fahrzeugposition zum Bestimmen der Fahrzeugposition in dem Luftbild, sowie zum Extrahieren der Straßendaten mittels Kantenerkennung in dem Luftbild durch Erzeugen von Kantendaten zu der Straße, insbesondere in Abhängigkeit eines Skalierungsfaktors des Luftbildes, welcher Information über den Maßstab des Luftbildes und/oder die Höhe enthält, aus welcher das Luftbild erstellt ist.

Die mit Bezug zu dem erfindungsgemäßen Verfahren vorgestellten Ausführungsformen und deren Vorteile gelten entsprechend für die beanspruchte Steuervorrichtung.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- Fig. 1: in einer perspektivischen Ansicht ein Luftbild einer Straße mit zwei Fahrbahnen, auf welcher ein Fahrzeug angeordnet ist, das in Kommunikation mit einem Datenserver ist, von welchem es Luftbilddaten abruft; und
- Fig. 2: in einer schematischen Darstellung einen Verfahrensablauf eines Verfahrens zum Bestimmen des vorausliegenden Verlaufs einer Straße gemäß einem Ausführungsbeispiel der vorliegenden Erfindung.

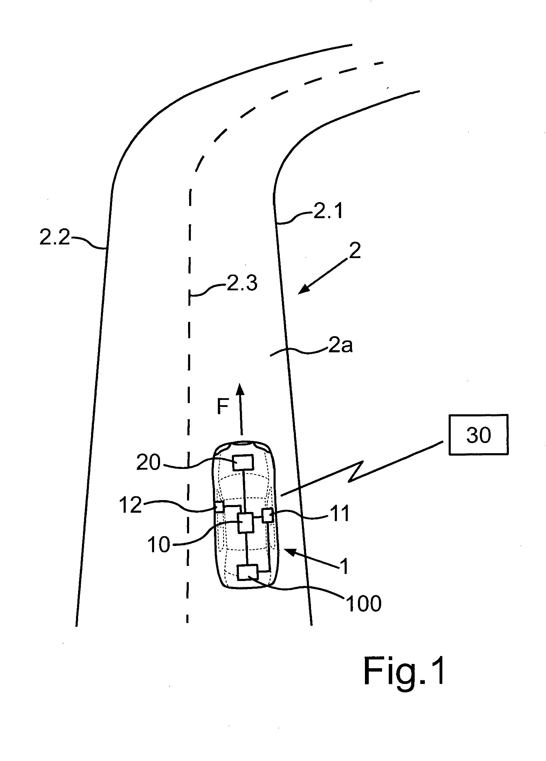

In der Fig. 1 ist ein Fahrzeug 1 gezeigt, welches in einer Fahrtrichtung F über die rechte Fahrbahn 2a einer Straße 2 fährt. Das Fahrzeug 1 weist eine Steuervorrichtung 10 auf, wobei das Fahrzeug 1 mittels der Steuervorrichtung 10 oder einer separaten Kommunikationseinrichtung in Kommunikation mit einem Datenserver 30 ist, von welchem es Luftbilddaten zu einer Umgebung des Fahrzeugs erhält bzw. abrufen kann. Die Luftbilddaten können wahlweise zumindest teilweise auch in dem Fahrzeug 1 gespeichert sein, sei es von vornherein oder durch zeitweises Zwischenspeichern der abgerufenen Luftbilddaten, insbesondere um bei einer zeitweisen Unterbrechung der Kommunikation, z.B. in einem Funkloch, einen Systemausfall zu vermeiden. Hierzu ist die Steuervorrichtung 10 mit einer Speichereinrichtung 12 gekoppelt. Das Fahrzeug 1 weist ferner eine mit der Steuervorrichtung 10 gekoppelte Positionserfassungseinrichtung 20 auf, z.B. ein GPS-Gerät, mittels welchem die Positionsdaten des Fahrzeugs erfasst werden können. Die Steuervorrichtung 10 ist dazu ausgebildet, die Fahrtrichtung F zu erfassen, z.B. durch den zeitlichen Verlauf der Positionsdaten, oder basierend auf einem von einer nicht dargestellten Sensoreinrichtung des Fahrzeugs 1 bereitgestellten Messwert. Auch eine Fahrzeuggeschwindigkeit kann auf diese Weise von der Steuervorrichtung 10 berücksichtigt werden. Die Steuervorrichtung 10 ist mit mindestens einem Aktuator 11 gekoppelt und dazu ausgebildet, den Aktuator 11 anzusteuern, insbesondere um eine Funktion wie Kurvenlicht oder eine Geschwindigkeitswarnung des Fahrzeugs 1 einzustellen. Ferner ist die Steuervorrichtung 10 mit einem Fahrzeugsystem 100 gekoppelt, insbesondere auch einem Navigationssystem. Das Fahrzeugsystem 100 ist als ein Fahrassistenzsystem ausgebildet oder weist ein eigenständiges Fahrassistenzsystem auf, mittels welchem ein Eingriff in die Fahrdynamik in Abhängigkeit des bereitgestellten Straßenverlaufs möglich ist.

Die von dem Datenserver 30 erhaltenen Luftbilddaten bilden dabei eine Datengrundlage zum Auswerten der Umgebung des Fahrzeugs 1 und zum Erkennen des Verlaufs der Straße 2. Die Steuervorrichtung 10 ist dazu ausgebildet, Straßendaten aus dem Luftbild zu extrahieren, indem sie eine Kantenerkennung in dem Luftbild vornimmt, insbesondere in Bezug auf Straßenbegrenzungen 2.1, 2.2 und/oder Fahrbahnmarkierungen 2.3. Die Fahrbahnmarkierungen 2.3 können z.B. in Form einer auch in einem Luftbild deutlich wahrnehmbaren, markanten Leitplanke vorliegen, welche den Verlauf der Straße exakt vorgeben, und welche z.B. in der Mitte zwischen zwei Fahrtrichtungen auf einer Autobahn vorgesehen sind, so wie es auf vielen italienischen Autobahnen realisiert ist.

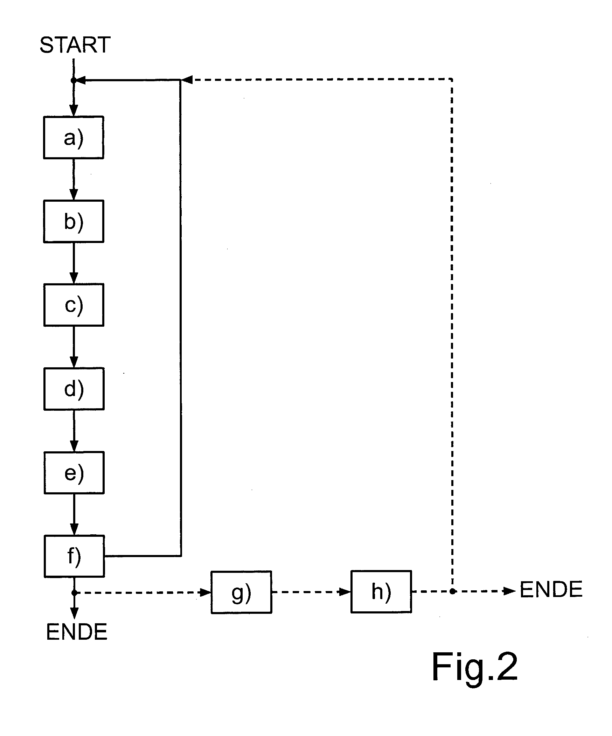

In der Fig. 2 ist der Ablauf eines Verfahren zum Bestimmen eines vorausliegenden Verlaufs einer Straße in Abhängigkeit einer Position eines die Straße nutzenden Fahrzeugs dargestellt, mit den Schritten:
a) Bestimmen der geographischen Position des Fahrzeugs sowie Erfassen der Fahrtrichtung des Fahrzeugs;
b) Abrufen von Umgebungsdaten in einem vorgebbaren Bereich um die Fahrzeugposition, insbesondere aus einer Speichereinheit des Fahrzeugs, und insbesondere in Bezug auf die Fahrtrichtung des Fahrzeugs, wobei ein Laden der Umgebungsdaten in Form von Luftbilddaten zu einem Luftbild der Straße in die Steuervorrichtung und Bestimmen der Fahrzeugposition in dem Luftbild mittels der Steuervorrichtung erfolgt;
c) Auswerten der Umgebungsdaten zum Erkennen von Straßendaten in dem Bereich und mindestens von der Straße, und Zuordnen des Fahrzeugs zu der Straße, insbesondere mittels einer Steuervorrichtung, wobei ein Extrahieren der Straßendaten, insbesondere von Fahrbahndaten einer einzelnen Fahrbahn auf der Straße, aus dem Luftbild bevorzugt durch Kantenerkennung in dem Luftbild und durch Erzeugen von Kantendaten zu der Straße mittels der Steuervorrichtung in Abhängigkeit eines Skalierungsfaktors des Luftbildes erfolgt, welcher Information über die Größe des Luftbildes und/oder die Höhe enthält, aus welcher das Luftbild erstellt ist;
d) Bestimmen der Fahrzeugposition relativ zu der Straße durch Kombinieren der Straßendaten mit der Fahrzeugposition, insbesondere mittels der Steuervorrichtung;
e) Bestimmen des Straßenverlaufs aus den Straßendaten in Bezug auf die Fahrtrichtung, wobei bevorzugt ein Auswerten von Kantendaten mittels der Steuervorrichtung erfolgt; und
f) Bereitstellen des Straßenverlaufs und der Fahrzeugposition an das Fahrerassistenzsystem.

Der ermittelte Fahrbahnverlauf kann für weitere Schritte des Verfahrens genutzt werden, insbesondere die Schritte:
g) Abrufen von Fahrzustandsdaten zu einem Fahrzustand des Fahrzeugs; und
h) Betreiben von mindestens einer Funktion des Fahrzeugs in Abhängigkeit der Fahrzeugposition und des Straßenverlaufs und in Abhängigkeit des

Fahrzustands. Hierbei kann z.B. eine Warnmeldung an den Fahrer generiert werden, dass sein Fahrzeug zu schnell ist, um eine vorausliegende Kurve zu durchfahren.

## Patentansprüche

1. Verfahren zum Bereitstellen eines vorausliegenden Straßenverlaufs in Bezug auf eine geografische Position und eine Fahrtrichtung (F) eines die Straße (2) nutzenden Fahrzeugs (1) an mindestens ein Fahrerassistenzsystem (100) des Fahrzeugs, mit den Schritten:
a) Bestimmen der geographischen Position des Fahrzeugs (1) sowie Erfassen der Fahrtrichtung (F) des Fahrzeugs;
b) Abrufen von Umgebungsdaten in einem vorgebbaren Bereich um die Fahrzeugposition in Form von Luftbilddaten zu einem Luftbild des vorgebbaren Bereichs;
c) Auswerten der Umgebungsdaten zum Erkennen von Straßendaten zumindest von der genutzten Straße (2) in dem Bereich, Extrahieren der Straßendaten aus den Luftbilddaten und Zuordnen des Fahrzeugs (1) zu der Straße (2);
d) Bestimmen der Fahrzeugposition relativ zu der Straße (2) durch Kombinieren der Straßendaten mit der Fahrzeugposition;
e) Bestimmen des Straßenverlaufs aus den Straßendaten in Bezug auf die Fahrtrichtung (F);
f) Bereitstellen des Straßenverlaufs und der Fahrzeugposition an das Fahrerassistenzsystem (100);
wobei
in Schritt e) nur diejenigen Straßenabschnitte zum Bestimmen des Straßenverlaufs ausgewertet werden, welche gemäß einer vorgegebenen Fahrtroute in den nächsten Sekunden oder Minuten von dem Fahrzeug (1) befahren werden.

2. Verfahren nach Anspruch 1, **dadurch gekennzeichnet, dass** das Abrufen in Schritt b) und das Extrahieren in Schritt c) und/oder Bestimmen in Schritt e) in einem Nahbereich um das Fahrzeug (1) erfolgt, insbesondere im Nahbereich von 100 bis 10000, bevorzugt 500 bis 5000, besonders bevorzugt 1000 Metern um das Fahrzeug, wobei der Nahbereich in Schritt b) in dem Bereich in Bezug auf die Luftbilddaten definiert wird.

3. Verfahren nach Anspruch 1 oder 2, **dadurch gekennzeichnet, dass** die Luftbilddaten aus einer Speichereinheit (12) des Fahrzeugs geladen werden und/oder zumindest teilweise über eine Kommunikationsschnittstelle, insbesondere online aus dem Internet, in das Fahrzeug (1) geladen werden.

4. Verfahren nach Anspruch 3, **dadurch gekennzeichnet, dass** die Luftbilddaten online aus dem Internet in das Fahrzeug (1) geladen werden, wobei in Schritt b) das Luftbild für einen Nahbereich in Fahrtrichtung (F) vor dem Fahrzeug (1) geladen wird und das Extrahieren in Schritt c) in dem Nahbereich in Bezug auf die Fahrtrichtung (F) erfolgt.

5. Verfahren nach einem der vorhergehenden Ansprüche, **dadurch gekennzeichnet, dass** nach dem Extrahieren in Schritt c) ein Interpolieren von Abschnitten des Luftbildes erfolgt, in welchen der Straßenverlauf zumindest teilweise unterbrochen ist, insbesondere vor dem Schritt e).

6. Verfahren nach einem der vorhergehenden Ansprüche, **dadurch gekennzeichnet, dass** die Straßendaten in Schritt c) bezogen auf ein vordefiniertes Koordinatensystem mit mindestens einer x- und einer y-Richtung, insbesondere ein dreidimensionales Koordinatensystem, bereitgestellt werden, wobei eine Schrittweite zumindest in x- und in y-Richtung definiert wird.

7. Verfahren nach einem der vorhergehenden Ansprüche, **dadurch gekennzeichnet, dass** der Straßenverlauf und die Fahrzeugposition mittels einer Steuervorrichtung (10) oder einem mit der Steuervorrichtung gekoppelten Fahrzeugsystem (100) ausgewertet werden und geprüft wird, ob eine Funktion des Fahrzeugs anzusteuern ist.

8. Verfahren nach Anspruch 7, **dadurch gekennzeichnet, dass** ein Fahrzustand des Fahrzeugs erfasst und ausgewertet wird und das Prüfen sowie das Ansteuern des Fahrzeugs (1) in Abhängigkeit des Fahrzustands erfolgt.

9. Steuervorrichtung zum Bereitstellen eines vorausliegenden Straßenverlaufs in Bezug auf eine geografische Position und eine Fahrtrichtung (F) eines die Straße (2) nutzenden Fahrzeugs (1) an mindestens ein Fahrerassistenzsystem (100) des Fahrzeugs, welche ausgebildet ist zum:
- Bestimmen der geographischen Position des Fahrzeugs (1) sowie Erfassen der Fahrtrichtung (F) des Fahrzeugs;
- Abrufen von Umgebungsdaten in einem vorgebbaren Bereich um die Fahrzeugposition (1);
- Auswerten der Umgebungsdaten zum Erkennen von Straßendaten zumindest von der genutzten Straße (2) in dem Bereich, und Zuordnen des Fahrzeugs (1) zu der Straße;
- Bestimmen der Fahrzeugposition relativ zu der Straße (2) durch Kombinieren der Straßendaten mit der Fahrzeugposition;
- Bestimmen des Straßenverlaufs aus den Straßendaten in Bezug auf die Fahrtrichtung (F);
- Bereitstellen des Straßenverlaufs und der Fahrzeugposition an das Fahrerassistenzsystem (100);
- Abrufen der Umgebungsdaten in Form von Luftbilddaten zu einem Luftbild des vorgebbaren Bereichs; und
- Extrahieren der Straßendaten aus den Luftbilddaten;
**dadurch gekennzeichnet, dass**
die Steuervorrichtung so ausgebildet ist, dass zum Bereitstellen des Straßenverlaufs nur diejenigen Straßenabschnitte ausgewertet werden, welche gemäß einer vorgegebenen Fahrtroute in den nächsten Sekunden oder Minuten von dem Fahrzeug (1) befahren werden.
